(19) Europäisches Patentamt
European Patent Office
Office européen des brevets

(11) Publication number: 0 471 221 B1

# (12) EUROPEAN PATENT SPECIFICATION

(45) Date of publication of patent specification: **03.05.95**

(51) Int. Cl.[6]: **A01N 43/68**, //(A01N43/68, 47:12)

(21) Application number: **91112473.3**

(22) Date of filing: **25.07.91**

## (54) Herbicidal compositions.

(30) Priority: **13.08.90 JP 211660/90**

(43) Date of publication of application:
**19.02.92 Bulletin 92/08**

(45) Publication of the grant of the patent:
**03.05.95 Bulletin 95/18**

(84) Designated Contracting States:
**DE ES FR GB IT**

(56) References cited:
**EP-A- 0 411 153**
**US-A- 4 932 998**

(73) Proprietor: **IDEMITSU KOSAN COMPANY LIMITED**
**1-1, Marunouchi 3-chome**
**Chiyoda-ku**
**Tokyo 100 (JP)**

(72) Inventor: **Hirata, Toshihiro, c/o Idemitsu Kosan Co., Ltd.**
**1280, Kamiizumi,**
**Sodegaura-machi**
**Kimitsu-gun,**
**Chiba-ken (JP)**
Inventor: **Kobayashi, Izumi, c/o Idemitsu Kosan Co., Ltd.**
**1280, Kamiizumi,**
**Sodegaura-machi**
**Kimitsu-gun,**
**Chiba-ken (JP)**
Inventor: **Kikkawa, Nobuyuki, c/o Idemitsu Kosan Co., Ltd.**
**1280, Kamiizumi,**
**Sodegaura-machi**
**Kimitsu-gun,**
**Chiba-ken (JP)**
Inventor: **Takematsu, Tetsuo, c/o Idemitsu Kosan Co., Ltd.**
**1280, Kamiizumi,**
**Sodegaura-machi**
**Kimitsu-gun,**
**Chiba-ken (JP)**

(74) Representative: **Türk, Gille, Hrabal, Leifert**
**Brucknerstrasse 20**
**D-40593 Düsseldorf (DE)**

EP 0 471 221 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a herbicidal composition comprising triazine derivatives and thiocarbamate type herbicides as active ingredients.

STATEMENT OF THE PRIOR ART

Heretofore a variety of herbicides have been developed and have contributed to agricultural productivity and labor saving. However, some herbicides have been used over many years and hence, weeds which are insufficiently controlled are increasing. It has thus been desirable to develop herbicides with a wide range of herbicidal spectrum and especially against such troublesome weeds. Also in order to overcome environmental pollution problems caused by conventional herbicides, it was desirable to develop herbicides with a high activity at a low dosage. Moreover, in order to control weeds emerging non-uniformly over a long period of time, it was desirable to develop herbicides having an excellent residual activity and having flexibility of treatment to exhibit effectiveness even though the treatment is performed over a long period from pre-emergence to a wide range of growing stages.

Under such a situation, the present inventors have found that specific, novel triazine derivatives containing a halo alkyl are compounds which show a high herbicidal effect against troublesome weeds both by soil treatment and by foliage treatment, without causing any phytotoxicity of Gramineae field crops, and moreover show excellent effectiveness against weeds in paddy fields (Japanese Patent Application Nos. 1-38178 and 1-154465). The present inventors made extensive investigations to further improve the herbicidal activity of the triazine derivatives.

As a result, it has been found that a composition comprising the triazine derivatives in combination with specific thiocarbamate type herbicides exhibit excellent herbicidal activity which can be unexpected from each property of these compounds and shows a high herbicidal effect at a low dosage and at the same time, has a wide range of herbicidal spectrum. The present invention has thus been accomplished.

SUMMARY OF THE INVENTION

That is, the present invention provides a herbicidal composition comprising as active ingredients triazine derivatives represented by general formula [I]:

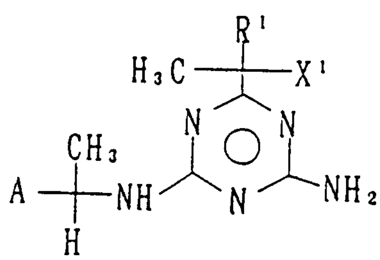

... [I]

[wherein A represents

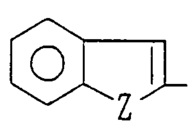

(wherein Z represents oxygen atom or sulfur atom), or

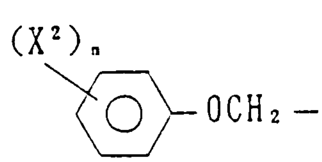

(wherein $X^2$ represents methyl group or fluorine atom and n represents 0 or an integer of 1 or 2); $R^1$ represents hydrogen atom or methyl group; and $X^1$ represents fluorine atom or chlorine atom] and thiocarbamate type herbicides represented by general formula [II]:

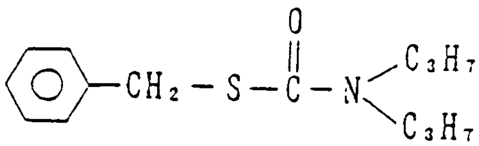

... [II]

DETAILED DESCRIPTION OF THE INVENTION

Specific examples of the triazine derivatives represented by general formula [I] described above include: 2-amino-4-[1-(benzofuran-2'-yl)ethylamino]-6-(α-fluoro,α-methylethyl)-s-triazine

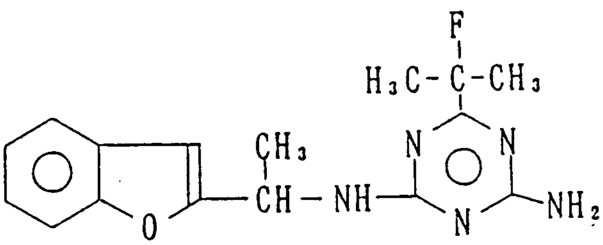

,

2-amino-4-[1-(benzofuran-2'-yl)ethylamino]-6-(α-fluoroethyl)-s-triazine

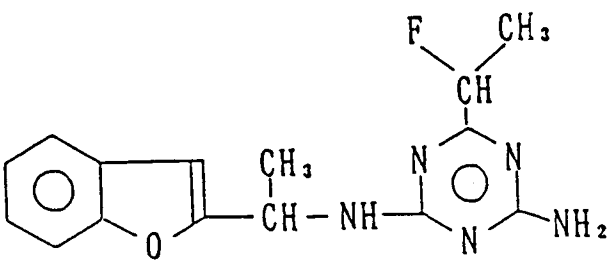

,

2-amino-4-[1-(benzothiophen-2'-yl)ethylamino]-6-(α-fluoro,α-methylethyl)-s-triazine

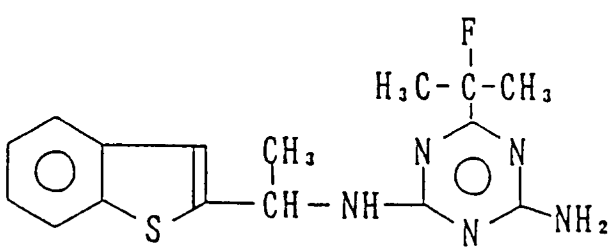

,

2-amino-4-(α-fluoro,α-methylethyl)-6-[2-(3'-methylphenoxy)-1-methylethylamino]-s-triazine

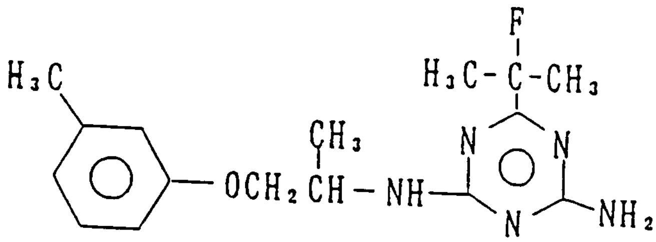

,

2-amino-4-(α-fluoro,α-methylethyl)-6-[2-(3'fluorophenoxy)-1-methylethylamino]-s-triazine

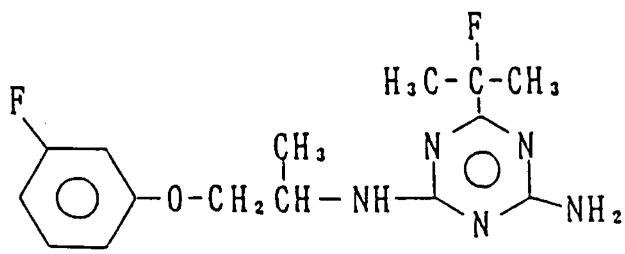

,

2-amino-4-(α-chloro,α-methylethyl)-6-[2-(3',5'-dimethylphenoxy)-1-methylethylamino]-s-triazine

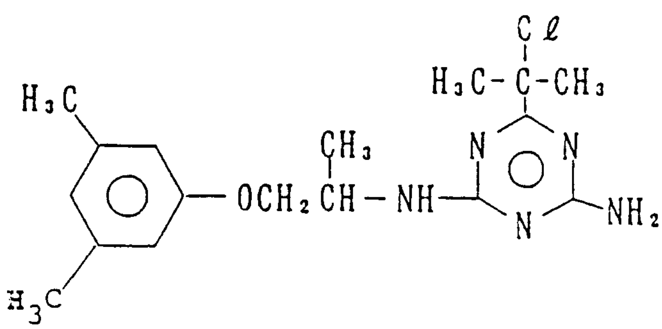

,

2-amino-4-(α-fluoro,α-methylethyl)-6-[2-(3',5'-dimethylphenoxy)-1-methylethylamino]-s-triazine

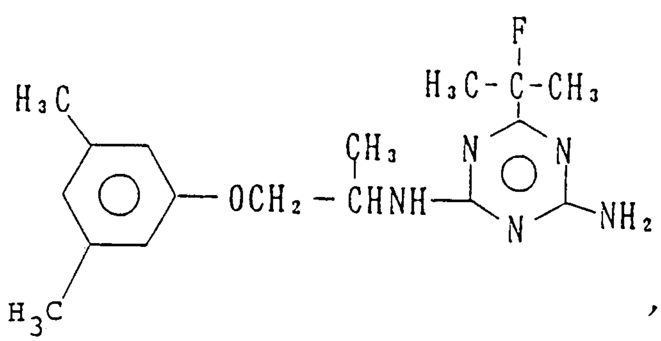

,

etc.

The triazine derivatives represented by general formula [I] described above may be prepared by various processes. Among these processes, an advantageous process comprises reacting alkyl amine salts represented by general formula [III]:

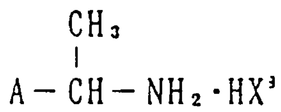 ··· [III]

[wherein A has the same significance as described above and $X^3$ represents a halogen atom] with cyanoguanidine represented by the following formula

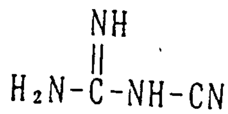

to prepare alkyl biguanide salts represented by general formula [IV]:

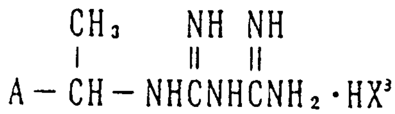 ··· [IV]

[wherein A and $X^3$ have the same significance as described above]; and then reacting the alkyl biguanide salts with alkyl esters represented by general formula [V]:

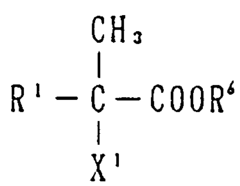 ··· [V]

[wherein $R^1$ and $X^1$ have the same significance as described above; and $R^6$ represents an alkyl group having 1 to 4 carbon atom]. According to this process, the desired triazine derivatives represented by general formula [I] can be efficiently obtained by reacting the alkylamine salts represented by general formula [III] with cyanoguanidine to prepare the alkyl biguanide salts represented by general formula [IV], and then reacting the salts [IV] with the alkyl esters represented by general formula [V].

DETAILED DESCRIPTION OF THE PREFERRED EMBODIMENTS

Herein, in the reaction of the alkylamine salts represented by general formula [III] with cyanoguanidine, both compounds may be used in equimolar amounts. Cyclic hydrocarbons such as benzene, decaline, alkylnaphthalenes, etc.; chlorinated hydrocarbons such as carbon tetrachloride, ethylene dichloride, chlorobenzene, dichlorobenzene, trichlorobenzene, may be used as the solvent. A reaction temperature is not particularly limited but the reaction sufficiently proceeds at a high temperature ranging from 80 to 200 °C.

According to this reaction, the alkylbiguanide derivative salts shown by general formula [IV] are obtained. By reacting [IV] with alkyl esters represented by general formula [V], the desired triazine derivatives represented by general formula [I] are prepared. This reaction efficiently proceeds generally in a solvent such as alcohols, e.g., methanol, ethanol, or isopropanol, various ketones, aliphatic hydrocarbons, various ethers, various cyclic hydrocarbons, or chlorinated hydrocarbons, in the presence of a catalyst such as a base, at a temperature of about 10 to about 100 °C.

Optical isomers are also present in these compounds and the products are obtained generally in the racemic form. However, it is also possible to obtain the respective enantiomers in a conventional manner such as asymmetric synthesis, etc. In the present invention, both racemic compounds and optical isomers alone may be used. In the present invention, the products may be in the form or salts with inorganic acid or

organic acid.

On the other hand, a specific example of the thiocarbamate type herbicide represented by general formula [II] described above includes S-benzyldipropyl thiocarbamate.

The thiocarbamate type herbicide represented by general formula [II] can be obtained by a known process. The thiocarbamate type herbicides have a high herbicidal effect on Gramineae weeds and are also effective against broad-leaved weeds. The herbicidal composition of the present invention comprises as active ingredients the triazine derivatives represented by general formula [I] described above and the thiocarbamate type herbicides represented by general formula [II] described above. The relative quantity of these components to be formulated is not particularly limited but an excellent synergistic effect can be obtained in a wide range of proportions. In general, it is preferred to formulate the triazine derivative and the thiocarbamate type herbicide in a range of from 10 : 1 to 1 : 100 (weight ratio).

The herbicidal composition of the present invention may be used in the form of wettable powders, emulsifiable concentrates, dusts, granules, flowable concentrates, or solutions, by blending the triazine derivatives represented by general formula [I] described above and the thiocarbamate type herbicides represented by general formula [II] described above with liquid carriers such as solvents, etc. or with solid carriers such as mineral powders, etc. In preparing these forms, there may be added surfactants such as emulsifiers, dispersing agents, developers, suspending agents, permeating agents, and stabilizers, as well as other auxiliary agents if necessary.

Where the herbicidal composition of the present invention is used in the form of wettable powders, 10 to 55 wt% of the aforesaid triazine derivatives and the thiocarbamate type herbicide as active ingredients, 40 to 88 wt% of the solid carrier and 2 to 5 wt% of the surfactant may generally be formulated to prepare a composition and the composition may be used. Where the herbicidal composition is used in the form of an emulsifiable concentrate or a flowable concentrate, 5 to 50 wt% of the aforesaid triazine derivatives and the thiocarbamate type herbicide as active ingredients, 35 to 90 wt% of the solvent and 5 to 15 wt% of the surfactant and other auxiliary agent may generally be formulated to prepare a composition and the resulting composition may be used.

Where the herbicidal composition is used in the form of a dust, 1 to 15 wt% of the aforesaid triazine derivatives and the thiocarbamate type herbicide as active ingredients and 85 to 99 wt% of the solid carrier may generally be formulated to prepare a composition. Where the herbicidal composition of the present invention is used in the form of granules, 0.1 to 15 wt% of the aforesaid triazine derivatives and the thiocarbamate type herbicide as active ingredients, 80 to 97.9 wt% of the solid carrier and 2 to 5 wt% of the surfactant may generally be formulated to prepare a composition. Herein, as the solid carrier, finely divided mineral powders are used. The finely divided mineral powders, are diatomaceous earth, oxides such as slaked lime, phosphates such as apatite, sulfates such as gypsum, silicates such as talc, pyrophyllite, clay, kaolin, bentonite, acid clay, white carbon, quartz powders, and silica powders.

The liquid carrier, may be organic solvents, for example, paraffin type or naphthene type hydrocarbons such as kerosene, mineral oil, spindle oil, aromatic hydrocarbons such as benzene, toluene, xylene, chlorinated hydrocarbons such as o-chlorotoluene, trichloromethane, trichloroethylene, alcohols such as cyclohexanol, amyl alcohol, ethylene glycol, alcohol ethers such as ethylene glycol monomethyl ether, ethylene glycol monoethyl ether, ketones such as isophorone, cyclohexanone, cyclohexenyl-cyclohexanone, ethers such as butyl cellosolve, dimethyl ether, methyl ethyl ether, esters such as isopropyl acetate, benzyl acetate, methyl phthalate, amides such as dimethylformamide, nitriles such as acetonitrile, propionitrile, sulfoxides such as dimethylsulfoxide, or a mixture thereof; or water and the like.

The surfactant, used may be any of anion type (alkylbenzene sulfonate, alkyl sulfonates, laurinamide sulfonate,), nonion type (polyoxyethylene octyl ether, polyethylene glycol laurate, sorbitan alkyl esters,), cation type (dimethyllaurylbenzyl ammonium chloride, laurylamine, stearyltrimethyl ammonium chloride,) and amphoteric type (amino acids, betaine,).

For purposes of improving properties of the preparation and enhancing the herbicidal effect, the herbicidal composition of the present invention may also contain high molecular compounds such as sodium alginate, carboxymethyl cellulose, carboxyvinyl polymer, gum arabic, hydroxypropylmethyl cellulose, and auxiliary agents in combination.

The herbicidal composition of the present invention exhibits an excellent effect on weeds in field crops such as wheat, barley, oat, etc., as a high degree of selective herbicide without causing any phytotoxicities to crops by pre-or post-emergence treatment to the soil or the foliage of weeds.

The herbicidal composition of the present invention is applied in an amount of about 0.1 to 10,000 g, preferably 1 to 1,000 g, per 10 ares. Where the composition is sprayed over the foliage of plant, the composition is diluted to about 1 to about 100,000 ppm, preferably 10 to 10,000 ppm and the diluted preparation is applied to the foliage.

The herbicidal composition of the present invention may also be used in combination with other herbicides. Examples of the conventional herbicides which can be used herein include diphenyl ether compounds, triazine compounds, phenoxyacetic acid compounds, carbamate compounds, acid anilide compounds, pyrazole compounds, phosphoric acid compounds, sulfonylurea compounds, imidazolinone compounds, dinitroaniline compounds, bromoxinyl, ioxinyl, and oxadiazone.

Furthermore, the herbicidal composition of the present invention may also be used in admixture with insecticides, sterilizers, plant growth regulators, or fertilizers, if necessary.

Next, the present invention is described with reference to examples.

Firstly, a method for making formulations is specifically described by referring to formulation examples. In the following formulation examples, "part" refers to % by weight. The triazine derivative (Compound A) and the thiocarbamate type herbicide (Compound B) compounds shown in Tables 1 and 2 were used, respectively.

Table 1

| Compound No. | Structural Formula | Name of Compound |
|---|---|---|
| A-1 | 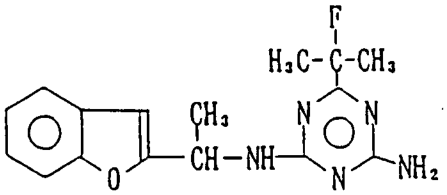 | 2-amino-4-[1-(benzofuran-2'-yl)ethylamino]-6-(α-fluoro, α-methylethyl)-s-triazine |
| A-2 | 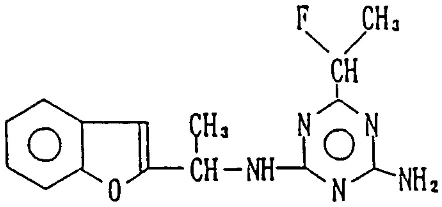 | 2-amino-4-[1-(benzofuran-2'-yl)ethylamino]-6(α-fluoroethyl)-s-triazine |
| A-3 | 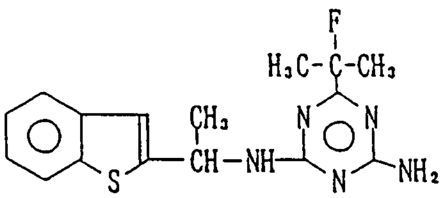 | 2-amino-4-[1-(benzothiophen-2'-yl)ethylamino]-6-(α-fluoro,α-methylethyl)-s-triazine |
| A-4 | 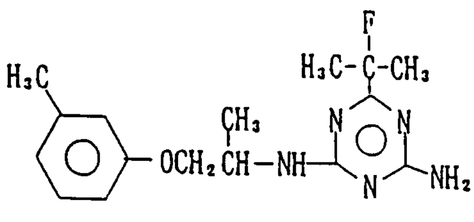 | 2-amino-4-[α-fluoro,α-methylethyl-6-(2 — 3' methylphenoxy)-1-methylethylamino]-s-triazine |
| A-5 | 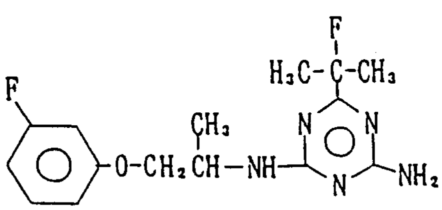 | 2-amino-4-(α-fluoro,α-methylethyl)-6-[2-(3'-fluorophenoxy)-1-methylethylamino]-s-triazine |

Table 1 (Continued)

| Compound No. | Structural Formula | Name of Compound |
| --- | --- | --- |
| A-6 | 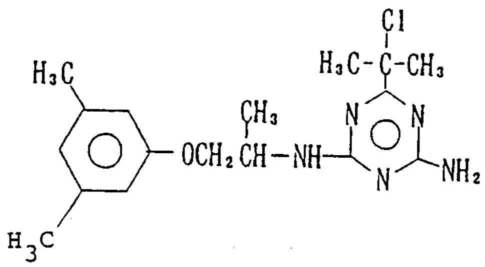 | 2-amino-4-(α-chloro,α-methylethyl)-6-[2-(3',5'-dimethylphenoxy)-1-methylethylamino]-s-triazine |
| A-7 | 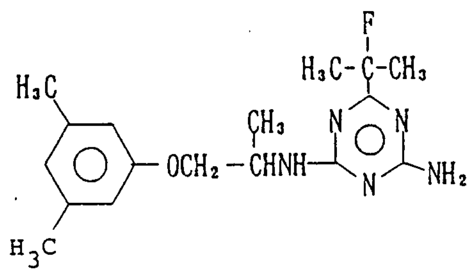 | 2-amino-4-(α-fluoro,α-methylethyl)-6-[2-(3',5'-dimethylphenoxy)-1-methylethylamino]-s-triazine |

Table 2

| Compound No. | Structural Formula | Name of Compound |
| --- | --- | --- |
| B | 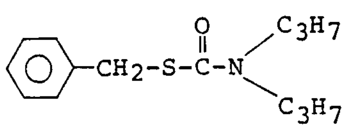 | S-benzyldipropyl thiocarbamate |

Formulation Example 1 Wettable powders

| | |
| --- | --- |
| Compound A-1 | 5 parts |
| Compound B | 15 parts |
| Diatomaceous earth | 62 parts |
| White carbon | 15 parts |
| Sodium alkylbenzenesulfonate | 2 parts |
| Sodium lignin sulfonate | 1 part |

The foregoing components are blended with each other, uniformly kneaded and ground into a powder to give 100 parts of a wettable powder.

Formulation Example 2 Emulsifiable concentrate

| | |
|---|---|
| Compound A-2 | 10 parts |
| Compound B | 30 parts |
| Xylene | 20 parts |
| Dimethylformamide | 20 parts |
| Solpol 2806B (manufactured by Toho Chemical Industry, surfactant) | 20 parts |

The foregoing components are uniformly dissolved and blended to give 100 parts of an emulsifiable concentrate.

Formulation Example 3 Dust

| | |
|---|---|
| Compound A-3 | 0.6 part |
| Compound B | 1.4 parts |
| Diatomaceous earth | 20 parts |
| Talc | 78 parts |

The foregoing components are blended with each other, uniformly kneaded and ground to give 100 parts of a dust.

Formulation Example 4 Granule

| | |
|---|---|
| Compound A-5 | 1 part |
| Compound B | 3 parts |
| Bentonite | 30 parts |
| Talc | 63 parts |
| Sodium lignin sulfonate | 3 parts |

The foregoing components are thoroughly blended with each other, uniformly mixed and ground into a powder. Water is added to the powder. After kneading well, the blend is grained and dried to give 100 parts of granules.

Formulation Example 5 Flowable concentrate

| | |
|---|---|
| Compound A-7 | 10 parts |
| Compound B | 15 parts |
| Methyl cellulose | 0.3 part |
| Colloidal silica | 1.5 parts |
| Sodium lignin sulfonate | 1 part |
| Polyoxyethylene nonyl phenyl ether | 2 parts |
| Water | 70.2 parts |

The foregoing components are thoroughly mixed and dispersed. The resulting slurry mixture is subjected to wet grinding to give 100 parts of a stable flowable concentrate.

Formulation Example 6 Wettable powders

By uniformly blending 97 parts of clay (trademark: JIKURAITO, manufactured by JIKURAITO KOGYO) as the carrier, 1.5 parts of alkylaryl sulfonate (trademark: NEOPELEX, manufactured by Kao Atlas Co., Ltd.)

as the surfactant, 1.5 parts of nonionic and anionic surfactant (trademark: Solpol 800A, manufactured by Toho Chemical Industry Co., Ltd.) and grinding into a powder, a carrier for wettable powders was obtained.

By uniformly blending 90 parts of this carrier for wettable powders and 10 parts of the triazine derivative shown in Table 1 (Compounds A-1 through A-7) or 10 parts of the thiocarbamate type herbicide shown in Table 2 (Compounds B) and grinding into a powder, wettable powders were obtained.

Furthermore, the carrier for wettable powders containing the triazine derivative obtained above was blended with the carrier for wettable powders containing the thiocarbamate type herbicide in definite amounts (ratios as active ingredients), uniformly kneaded and ground into powders to give wettable powders.

Example 1 Test on post-emergence treatment

Wagner's pots of 1/2000 ares were filled with soil from upland fields and planted with weed seeds of Alopecurus myosuroides, Galium aparine L., Veronica hederifolia and Viola arvensis and crop seeds of wheat, barley and oat. The seeds were then covered with soil and cultivated in a greenhouse. An aqueous suspension of a definite amount of the herbicide obtained in Formulation Example 6 was uniformly sprayed onto the foliage of 1.5 to 2.5 leaf stage of these weeds and 3 leaf stage of the crops at a spray volume corresponding to 100 liters/10 ares. Then, cultivation was performed in the greenhouse. After 20 days, crop injury and the herbicidal effect on the weeds were evaluated according to the criterion described below. The results are shown in Table 3.

(Criterion for assessment)

| Degree of herbicidal effect | Percent of weed control (herbicidal rate) |
|---|---|
| 0 | less than 5% (little effective) |
| 1 | 5-20% |
| 2 | 20-40% |
| 3 | 40-70% |
| 4 | 70-80% |
| 5 | more than 90% (almost all killed) |

The herbicidal rate described above was determined according to the following equation by measuring the raw weight of weed on the ground in the treated group and the raw weight of weed on the ground in the untreated group.

$$\text{Herbicidal rate (\%)} = \left(1 - \frac{\text{Weight of weed on the ground in the treated group}}{\text{Weight of weed on the ground in the untreated group}}\right) \times 100$$

Degree of crop injury

- 0 no injury to crops
- 1 little injury to crops
- 2 some injury to crops
- 3 injury to crops
- 4 serious injury to crops
- 5 almost all crops are withered to death

Table 3

| Active ingredient | | Dosage (g/10a) | Herbicidal Effect | | | | Crop Injury | | |
|---|---|---|---|---|---|---|---|---|---|
| | | | Alopecurus myosuroides | Galium aparine L. | Veronica hederifolia | Viola arvensis | Wheat | Barley | Sorghum |
| Triazine Derivative | A-1 | 10<br>5 | 2<br>1 | 2<br>1 | 3<br>2 | 3<br>2 | 0<br>0 | 0<br>0 | 0<br>0 |
| | A-2 | 10<br>5 | 3<br>2 | 3<br>2 | 4<br>2 | 4<br>3 | 0<br>0 | 0<br>0 | 0<br>0 |
| | A-3 | 10<br>5 | 2<br>1 | 3<br>1 | 3<br>2 | 3<br>2 | 0<br>0 | 0<br>0 | 0<br>0 |
| | A-4 | 10<br>5 | 2<br>1 | 3<br>1 | 3<br>2 | 4<br>2 | 0<br>0 | 0<br>0 | 0<br>0 |
| | A-5 | 10<br>5 | 3<br>1 | 3<br>2 | 4<br>3 | 4<br>3 | 0<br>0 | 0<br>0 | 0<br>0 |
| | A-6 | 10<br>5 | 2<br>1 | 3<br>1 | 3<br>2 | 4<br>2 | 0<br>0 | 0<br>0 | 0<br>0 |
| | A-7 | 10<br>5 | 3<br>1 | 4<br>2 | 4<br>2 | 4<br>3 | 0<br>0 | 0<br>0 | 0<br>0 |
| Thiocarbamate Type Herbicide | B | 200<br>100 | 4<br>3 | 3<br>2 | 4<br>2 | 2<br>1 | 0<br>0 | 0<br>0 | 0<br>0 |

Table 3 (Continued)

| Triazine Derivative | | Thiocarbamate Type Herbicide | | Herbicidal Effect | | | | Crop Injury | | |
|---|---|---|---|---|---|---|---|---|---|---|
| Kind | Dosage (g/10a) | Kind | Dosage (g/10a) | Alopecurus myosuroides | Galium aparine L. | Veronica hederifolia | Viola arvensis | Wheat | Barley | Sorghum |
| A-1 | 10<br>10<br>5<br>5 | B | 200<br>100<br>200<br>100 | 5<br>5<br>5<br>5 | 5<br>5<br>5<br>5 | 5<br>5<br>5<br>5 | 5<br>5<br>5<br>5 | 0<br>0<br>0<br>0 | 0<br>0<br>0<br>0 | 0<br>0<br>0<br>0 |
| A-2 | 10<br>10<br>5<br>5 | B | 200<br>100<br>200<br>100 | 5<br>5<br>5<br>5 | 5<br>5<br>5<br>5 | 5<br>5<br>5<br>5 | 5<br>5<br>5<br>5 | 0<br>0<br>0<br>0 | 0<br>0<br>0<br>0 | 0<br>0<br>0<br>0 |
| A-3 | 10<br>10<br>5<br>5 | B | 200<br>100<br>200<br>100 | 5<br>5<br>5<br>5 | 5<br>5<br>5<br>5 | 5<br>5<br>5<br>5 | 5<br>5<br>5<br>5 | 0<br>0<br>0<br>0 | 0<br>0<br>0<br>0 | 0<br>0<br>0<br>0 |
| A-4 | 10<br>10<br>5<br>5 | B | 200<br>100<br>200<br>100 | 5<br>5<br>5<br>5 | 5<br>5<br>5<br>5 | 5<br>5<br>5<br>5 | 5<br>5<br>5<br>5 | 0<br>0<br>0<br>0 | 0<br>0<br>0<br>0 | 0<br>0<br>0<br>0 |
| A-5 | 10<br>10<br>5<br>5 | B | 200<br>100<br>200<br>100 | 5<br>5<br>5<br>5 | 5<br>5<br>5<br>5 | 5<br>5<br>5<br>5 | 5<br>5<br>5<br>5 | 0<br>0<br>0<br>0 | 0<br>0<br>0<br>0 | 0<br>0<br>0<br>0 |
| A-6 | 10<br>10<br>5<br>5 | B | 200<br>100<br>200<br>100 | 5<br>5<br>5<br>5 | 5<br>5<br>5<br>5 | 5<br>5<br>5<br>5 | 5<br>5<br>5<br>5 | 0<br>0<br>0<br>0 | 0<br>0<br>0<br>0 | 0<br>0<br>0<br>0 |
| A-7 | 10<br>10<br>5<br>5 | B | 200<br>100<br>200<br>100 | 5<br>5<br>5<br>5 | 5<br>5<br>5<br>5 | 5<br>5<br>5<br>5 | 5<br>5<br>5<br>5 | 0<br>0<br>0<br>0 | 0<br>0<br>0<br>0 | 0<br>0<br>0<br>0 |

Some data were extracted from the results shown in Table 3 and the synergistic effect of the triazine derivative and the thiocarbamate type herbicide was examined on Galium aparine L. and Viola arvensis according to the following method.

$$QE = Qa + Qb - \frac{Qa \cdot Qb}{100}$$

Q a : found data (%) of herbicidal rate when treated at a dosage corresponding to a g/10 ares using the triazine derivative alone as active ingredient

Q b : found data (%) of herbicidal rate when treated at a dosage corresponding to b g/10 ares using the thiocarbamate type herbicide alone as active ingredient

Q E : expected value

[Limpel, L.E., P.H. Schuldt and D. Lamont, Proc. NEWCC, 16, 48-53 (1962)]

Herein, when the found data (herbicidal rate) of the herbicidal obtained by mixing the triazine derivative and the thiocarbamate type herbicide is larger than Q E, it can be said that the herbicidal activity is synergistic. The results are shown in Table 4.

Table 4

| Triazine Derivative | | Thiocarbamate Type Herbicide | | Herbicidal Effect | | | |
|---|---|---|---|---|---|---|---|
| Kind | Dosage (g/10a) | Kind | Dosage (g/10a) | Percent control of Galium aparine L.(%) | Expected Value ($Q_E$ )(%) | Percent control of Viola arvensis(-%) | Expected Value ($Q_E$ )(%) |
| - | - | B | 100 | 36 | - | 19 | - |
| $A_1$ | 10 | - | - | 38 | - | 54 | - |
| $A_1$ | 10 | B | 100 | 97 | 60 | 96 | 63 |
| $A_2$ | 5 | - | - | 37 | - | 68 | - |
| $A_2$ | 5 | B | 100 | 98 | 60 | 97 | 74 |
| $A_3$ | 10 | - | - | 56 | - | 64 | - |
| $A_3$ | 10 | B | 100 | 99 | 72 | 96 | 71 |
| $A_4$ | 10 | - | - | 62 | - | 74 | - |
| $A_4$ | 10 | B | 100 | 100 | 76 | 98 | 79 |
| $A_5$ | 5 | - | - | 38 | - | 72 | - |
| $A_5$ | 5 | B | 100 | 97 | 60 | 99 | 77 |
| $A_5$ | 10 | - | - | 64 | - | 78 | - |
| $A_5$ | 10 | B | 100 | 99 | 77 | 100 | 82 |
| $A_7$ | 5 | - | - | 40 | - | 63 | - |
| $A_7$ | 5 | B | 100 | 95 | 62 | 98 | 70 |

Example 2 Field test (pre-emergence treatment test)

Test zone having each plot of 2 $m^2$ were prepared and weed seeds of Alopecurus myosuroides, Galium aparine L., Stellaria media, Viola arvensis, Matricaria inodora, Veronica hederifolia, Papaver rhoeas and Aphanes arvensis and crop seeds of wheat and barley were simultaneously planted.

At the pre-emergence timing of wheat, barley and weeds, a given amount of a dilution of the herbicide obtained in Formulation Example 6 was uniformly sprayed over the soil surface at a spray volume corresponding to 20 liters/10 ares. The test was carried out by 3 replications.

The weeds on the ground which survived 60 days after spraying of the chemical were cut out and their raw weight were measured. According to the following equation, a weed controlling rate was determined as an average of the 3 replicates.

$$\text{Percent of weed control (\%)} = \left(1 - \frac{\text{Weight of survived weed on the ground in the treated plot}}{\text{Weight of survived weed on the ground in the untreated plot}}\right) \times 100$$

With respect to wheat and barley, their raw weights on the ground were measured also as in weeds and the degree of crop injury (inhibition rate) was determined. The results are shown in Table 5.

Table 5

| Active ingredient | A2 + B | | A7 + B | |
|---|---|---|---|---|
| Dosage(g/10a) | 20+300 | 10+300 | 20+300 | 10+300 |
| Percent of Weed Control (%) | | | | |
| Alopecurus myosuroides | 100 | 100 | 100 | 100 |
| Galium aparine L. | 100 | 100 | 100 | 100 |
| Stellaria media | 100 | 100 | 100 | 100 |
| Viola arvensis | 100 | 100 | 100 | 100 |
| Matricaria inodora | 100 | 100 | 100 | 100 |
| Veronica hederifolia | 100 | 100 | 100 | 100 |
| Papaver rhoeas | 100 | 100 | 100 | 100 |
| Aphanes arvensis | 100 | 100 | 100 | 100 |
| Crop Injury | | | | |
| Wheat | 0 | 0 | 0 | 0 |
| Barley | 0 | 0 | 0 | 0 |

Example 3 Field test (post-emergence treatment test)

Test zone having each plot of 2 $m^2$ were prepared and weed seeds of Alopecurus myosuroides, Galium aparine L., Stellaria media, Viola arvensis, Matricaria inodora, Veronica hederifolia, Papaver rhoeas and Apanes arvensis and crop seeds of wheat and barley were simultaneously planted.

When weeds grew at the 2-3 leaf stage and wheat and barley reached the 3-leaf stage, a given amount of a dilution of the herbicide obtained in Formulation Example 6 was uniformly sprayed onto the foliage at a spray volume corresponding to 20 liters/10 ares.

The percent of weed control and the degree of crop injury were determined 30 days after spraying the chemical in a manner similar to Example 2. The results are shown in Table 6.

Table 6

| Active ingredient | A2 + A | | A7 + B | |
|---|---|---|---|---|
| Dosage(g/10a) | 20 + 300 | 10 + 300 | 20 + 300 | 10 + 300 |
| Percent of Weed Control (%) | | | | |
| Alopecurus myosuroides | 100 | 100 | 100 | 100 |
| Galium aparine L. | 100 | 100 | 100 | 100 |
| Stellaria media | 100 | 100 | 100 | 100 |
| Viola arvensis | 100 | 100 | 100 | 100 |
| Matricaria inodora | 100 | 100 | 100 | 100 |
| Veronica hederifolia | 100 | 100 | 100 | 100 |
| Papaver rhoeas | 100 | 100 | 100 | 100 |
| Aphanes arvensis | 100 | 100 | 100 | 100 |
| Crop Injury | | | | |
| Wheat | 0 | 0 | 0 | 0 |
| Barley | 0 | 0 | 0 | 0 |

By the synergistic effect of the triazine derivative and thiocarbamate type herbicide as active ingredient, the herbicidal composition of the present invention show a high herbicidal effect at a low dosage and also have a wide range of herbicidal spectrum. Further when the composition is used as herbicide for field crops, the composition has flexibility of treatment to exhibit effectiveness, as compared to conventional herbicides for field crops. The composition also shows a high herbicidal activity even against troublesome weeds both by treatment to the soil at the pre- or post-emergence of weeds and by treatment to the foliage at the post-emergence stage. In addition, no crop injury is caused. In particular, the effect is markedly high in treatment to the soil or foliage treatment in fields where Gramineae crops grow.

## Claims

**1.** A herbicidal composition comprising as active ingredients a triazine derivative represented by general formula [I]:

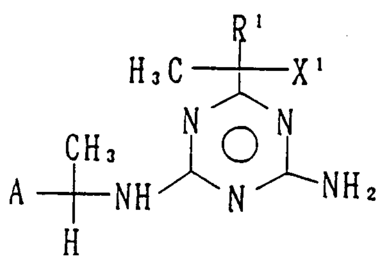

··· [I]

wherein A represents

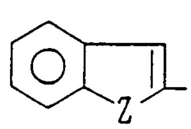

wherein Z represents oxygen atom or sulfur atom, or

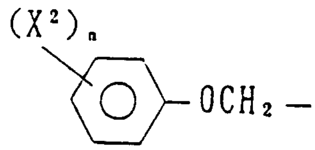

wherein $X^2$ represents a methyl group or a fluorine atom and n represents 0 or an integer of 1 or 2; $R^1$ represents a hydrogen atom or a methyl group; and $X^1$ represents a fluorine atom or a chlorine atom and a thiocarbamate type herbicide represented by general formula [II]:

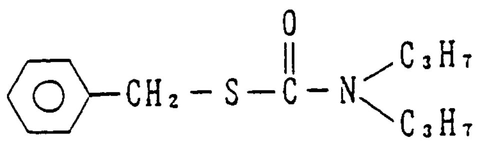

... [II]

2. The herbicidal composition as claimed in claim 1,wherein the triazine derivative represented by general formula [I] is a triazine derivative selected from the group consisting of 2-amino-4-[1-(benzofuran-2'-yl)-ethylamino]-6-(α-fluoro,α-methylethyl)-s-triazine, 2-amino-4-[1-(benzofuran-2'-yl)ethylamino]-6-(α-fluoroethyl)-s-triazine, 2-amino-4-[1-(benzothiophen-2'-yl)ethylamino]-6-(α-fluoro,α-methylethyl)-s-triazine, 2-amino-4-(α-fluoro,α-methylethyl)-6-[2-(3'-methylphenoxy)-1-methylethylamino]-s-triazine, 2-amino-4-(α-fluoro,α-methylethyl)-6-[2-(3'fluorophenoxy)-1-methylethylamino]-s-triazine, 2-amino-4-(α-chloro,α-methylethyl)-6-[2-(3',5'-dimethylphenoxy)-1-methylethylamino]-s-triazine and 2-amino-4-(α-fluoro,α-methylethyl)-6-[2-(3',5'-dimethylphenoxy)-1-methylethylamino]-s-triazine.

3. The herbicidal composition as claimed in claim 1,wherein the thiocarbamate type herbicide represented by general formula [II] is S-benzyldipropyl thiocarbamate.

## Patentansprüche

1. Herbizide Zusammensetzung, die als aktive Bestandteile (Wirkstoffe) enthält
ein Triazinderivat der allgemeinen Formel (I)

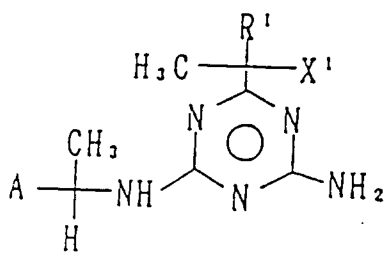

... [I]

worin bedeuten:
A

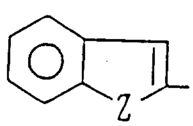

worin Z für ein Sauerstoff- oder Schwefelatom steht oder

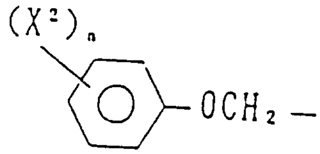

worin $X^2$ für eine Methylgruppe oder ein Fluoratom steht und n 0 oder die ganze Zahl 1 oder 2 darstellt;
$R^1$ ein Wasserstoffatom oder eine Methylgruppe; und
$X^1$ ein Fluoratom oder ein Chloratom, und
ein Herbizid vom Thiocarbamat-Typ der allgemeinen Formel (II):

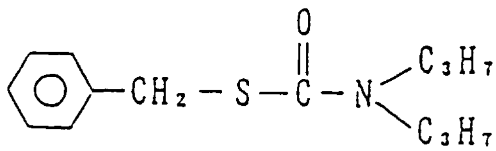

··· [II]

2. Herbizide Zusammensetzung nach Anspruch 1, worin das Triazinderivat der allgemeinen Formel (I) ein Triazinderivat ist, das ausgewählt wird aus der Gruppe, die besteht aus 2-Amino-4-[1-(benzofuran-2'-yl)-ethylamino]-6-(α-fluoro,α-methylethyl)-s-triazin,2-Amino-4-[1-(benzofuran-2'-yl)ethylamino]-6-(α-fluoroethyl)-s-triazin, 2-Amino-4-[1-(benzothiophen-2'-yl)ethylamino]-6-(α-fluoro,α-methylethyl)-s-triazin, 2-Amino-4-[α-fluoro,α-methylethyl)-6-[2-(3'-methylphenoxy)-1-methylethylamino]-s-triazin, 2-Amino-4-[α-fluoro,α-methylethyl)-6-[2-(3'-fluorophenoxy)-1-methylethylamino]-s-triazin und 2-Amino-4-(α-chloro,α-methylethyl)-6-[2-(3',5'-dimethylphenoxy)-1-methylethylamino]-s-triazin, 2-Amino-4-(α-fluoro,α-methylethyl)-6-[2-(3',5'-dimethylphenoxy)-1-methylethylamino]-s-triazin.

3. Herbizide Zusammensetzung nach Anspruch 1, worin das Herbizid vom Thiocarbamat-Typ der allgemeinen Formel (II) S-Benzyldipropylthiocarbamat ist.

**Revendications**

1. Une composition herbicide comprenant, comme ingrédients actifs, un dérivé de triazine représenté par la formule générale [I] :

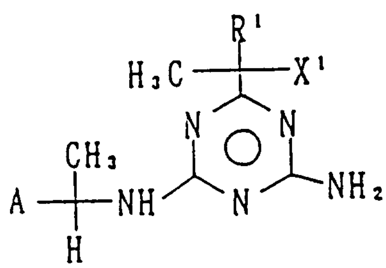

[I]

dans laquelle A représente

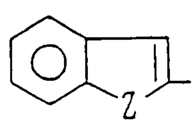

où Z représente un atome d'oxygène ou un atome de soufre, ou

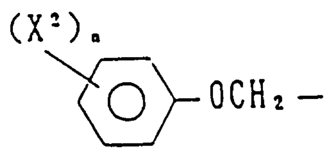

ou $X^2$ représente un groupe méthyle ou un atome de fluor et n représente 0 ou le nombre entier 1 ou 2 ; $R^1$ représente un atome d'hydrogène ou un groupe méthyle ; et $X^1$ représente un atome de fluor ou un atome de chlore, et un herbicide du type thiocarbamate représenté par la formule générale [II] :

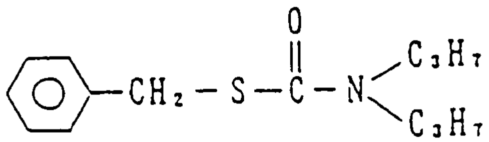

[II]

2. La composition herbicide telle que revendiquée dans la revendication 1, dans laquelle le dérivé de triazine représenté par la formule générale [I] est un dérivé de triazine choisi dans le groupe formé par la 2-amino-4-[1-(benzofuranne-2'-yl)éthylamino]-6-(α-fluoro-α-méthyléthyl)-*s*-triazine, la 2-amino-4-[1-(benzofuranne-2'-yl)éthylamino]-6-(α-fluoroéthyl)-*s*-triazine, la 2-amino-4-[1-(benzothiophène-2'-yl)-éthylamino]-6-(α-fluoro-α-méthyléthyl)-*s*-triazine, la 2-amino-4-(α-fluoro-α-méthyléthyl)-6-[2-(3'-méthylphénoxy)-1-méthyléthylamino]-*s*-triazine, la 2-amino-4-(α-fluoro-α-méthyléthyl)-6-[2-(3'-fluorophénoxy)-1-méthyléthylamino]-*s*-triazine, la 2-amino-4-(α-chloro-α-méthyléthyl)-6-[2-(3',5'-diméthylphénoxy)-1-méthyléthylamino]-*s*-triazine et la 2-amino-4-(α-fluoro-α-méthyléthyl)-6-[2-(3',5'-diméthylphénoxy)-1-méthyléthylamino]-*s*-triazine.

3. La composition herbicide telle que revendiquée dans la revendication 1, dans laquelle l'herbicide du type thiocarbamate représenté par la formule générale [II] est le dipropylthiocarbamate de S-benzyle.